# EUROPEAN PATENT APPLICATION

(11) **EP 2 803 819 A1**
(43) Date of publication of application: **19.11.2014**
(21) Application number: 14168028.0
(22) Date of filing: 13.05.2014
(51) Int. Cl.: F01D 5/00

(54) **Modified turbine buckets and methods for modifying turbine buckets**

(30) Priority: 15.05.2013 US 201313894514
(71) Applicant: General Electric Company, Schenectady, New York 12345 (US)
(72) Inventor: Connor, James Ryan, Greenville, SC South Carolina 29615 (US); Ward, Jr. John David, Greenville, SC South Carolina 29615 (US); Hunt, Mark Lawrence, Greenville, SC South Carolina 29615 (US); Hullender, Robert Trent, Greenville, SC South Carolina 29615 (US)
(74) Representative: Illingworth-Law, William Illingworth

(57) **Abstract**

Methods 10 for modifying a turbine buckets include removing 11 at least an original outer edge for an entire length of the slash face of the turbine bucket and adding 12 a new material to the slash face to build a new outer edge, wherein the new outer edge extends the entire length of the slash face.

## Description

The subject matter disclosed herein relates to modifying turbine buckets and, more specifically, to modifying slash faces of turbine buckets.

Turbine buckets for industrial applications can experience extended service cycles in hostile conditions that may include operating temperatures exceeding 1400°C. High temperature performance alloys (such as nickel and cobalt super alloys) may be utilized to extend service life of these turbine components. However, even these high performance alloys may be subject to erosion, oxidation or other distress. Turbine buckets may therefore undergo modification to provide for continued operation (e.g., through repair, adjustment, upgrades, etc.). For example, slash faces on bucket platforms may undergo modification to potentially remedy areas of oxidation or erosion. However, the modification of such high temperature performance alloys may be difficult, particularly when only addressing localized areas.

Accordingly, alternative modified turbine buckets and methods for modifying turbine buckets would be welcome in the art.

In one embodiment, a method for modifying a turbine bucket is disclosed. The method includes removing at least an original outer edge for an entire length of the slash face of the turbine bucket. The method further includes adding a new material to the slash face to build a new outer edge, wherein the new outer edge extends the entire length of the slash face.

In another embodiment, a modified turbine bucket is disclosed. The modified turbine bucket includes an airfoil extending from a bucket platform and a root portion extending from an opposite side of the bucket platform. The modified turbine bucket further includes a slash face on the bucket platform, the slash face including a new outer edge, wherein the original outer edge was removed for an entire length of the slash face of the turbine bucket prior to adding new material to the slash face to build the new outer edge, and wherein the new outer edge extends the entire length of the slash face.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a method for modifying a turbine bucket according to one or more embodiments shown or described herein;
FIG. 2 is a perspective view of a turbine bucket with an original slash face according to one or more embodiments shown or described herein;
FIG. 3 is a perspective view of a turbine bucket with a partially removed slash face according to one or more embodiments shown or described herein; and,
FIG. 4 is a perspective view of a turbine bucket with a modified slash face according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Methods for modifying slash faces of turbine buckets disclosed herein generally comprise removing an original outer edge for an entire length of the slash face and adding a new material to build a new outer edge that extends the entire length of the slash face. Modifying the entire length of the slash face can promote uniform properties across the entire new outer edge. The new material may also provide greater oxidation resistance or other durability related qualities compared to the original outer edge, or, even be built to greater dimensions to reduce the gap between slash faces of adjacent turbine buckets. The methods and modified turbine buckets will now be discussed in more detail herein.

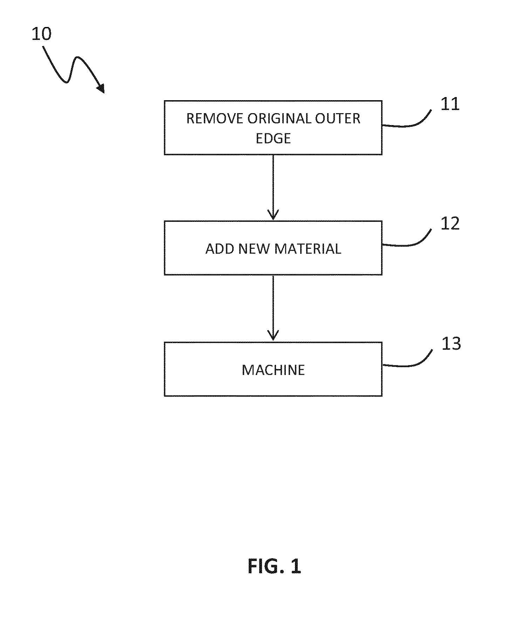

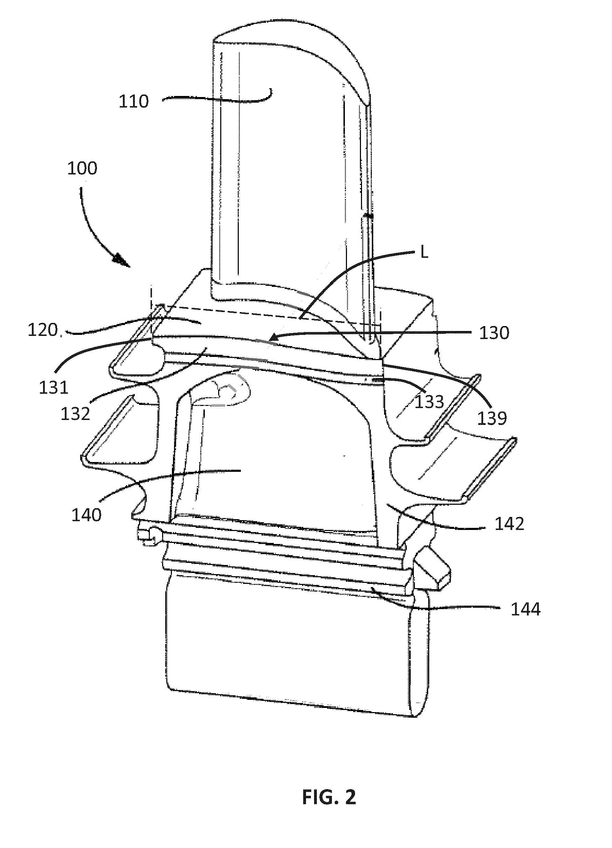

Referring to FIGS. 1-4, a method 10 is illustrated for modifying a turbine bucket 100, and, more specifically, modifying a slash face 130 of the turbine bucket 100. As best illustrated in FIG. 2, a turbine bucket 100 generally comprises an airfoil 110 extending from a bucket platform 120 and a root portion 140, including a shank 142 and a dovetail 144, extending from an opposite side of the bucket platform. It should be appreciated that the turbine bucket 100, when placed in a turbine wheel (not illustrated) is one of an annular array of turbine buckets secured about the periphery of the turbine wheel. While axial entry buckets are disclosed herein, it should also be appreciated that the embodiments hereof may also be applied to tangential entry buckets. Furthermore, while FIGS. 2-4 illustrate turbine buckets 100 at various stages of the method 10, it should be appreciated that these illustrations are exemplary only and other turbine buckets 100 embodying additional or alternative features may also be realized.

Still referring to FIG. 2, the bucket platform 120 of the turbine bucket 100 comprises a slash face 130 on each side of the airfoil 110. The slash face 130 extends the entire length L of the bucket platform 120 from the leading side 131 to the trailing side 139. When installed on a turbine wheel, the slash face 130 of the turbine bucket 100 will circumferentially oppose an adjacent slash face of an adjacent turbine bucket (not illustrated) to form a gap there between. In some embodiments, each slash face 130 may additionally comprise a groove 133 for receiving a damper pin (not illustrated) to operate as a vibration damper.

The turbine bucket 100 can comprise any suitable material or materials such as high temperature performance alloys (e.g., nickel and cobalt based super alloys). Furthermore, the turbine bucket 100 can comprise any stage turbine bucket for any frame turbine. In some specific embodiments, the turbine bucket 100 may comprise a first stage turbine bucket that experiences higher operating temperatures than subsequent stage turbine buckets.

Referring now to FIGS. 1-3, the method 10 is illustrated for modifying the turbine bucket 100, and, more specifically, modifying the slash face 130 of the turbine bucket 100. The method 10 first comprises removing at least an original outer edge 132 for an entire length L of the slash face 130 of the turbine bucket 100 in step 11.

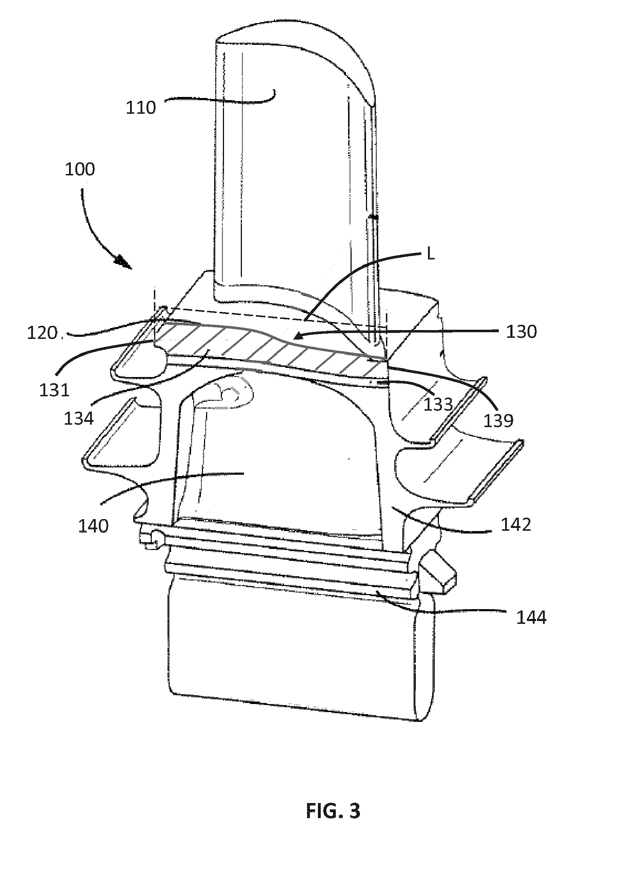

The original outer edge 132 (illustrated in FIG. 2) of the slash face 130 comprises the outer portion of material that forms a gap with the slash face of an adjacent turbine bucket (not illustrated) when installed on a turbine wheel. As used herein "original outer edge" can refer to the outer edge as originally designed and/or manufactured by an original equipment manufacturer, or the outer edge as originally received by a facility that may have undergone one or more previous modifications (e.g., repairs, adjustments, upgrades, etc.) prior to undergoing the modification through method 10. The original outer edge 132 is removed for the entire length L of the slash face 130, i.e., from the leading side 131 to the trailing side 139 of the bucket platform 120 to form a removed portion 134 (illustrated in FIG. 3). By removing the entire length L of the original edge 132, the new outer edge 136 can potentially have more uniform properties than if just a portion of the original outer edge 132 were removed (particularly if the new material 135 is different than the original material as will become appreciated herein). Removal may occur through any suitable tools, methods or combinations thereof. For example, in some embodiments removal in step 11 may occur via milling, grinding or the like and may be automated, manual or combinations thereof. Removal in step 11 may also occur via one single pass or through multiple iterations.

The original outer edge 132 may be removed for any suitable depth. For example, when the slash face 130 comprises erosion or other wear present from sustained operation, the outer edge 132 may be removed for a suitable depth that allows for the complete removal of any such targeted material. In some embodiments, the original outer edge 132 of the slash face 130 is removed at a removal depth of about 1.270 mm to about 1.016 mm. In some embodiments, the removal depth may be uniform across the entire length L of the slash face 130. In other embodiments, the removal depth may vary with respect to different locations across the length L of the slash face 130.

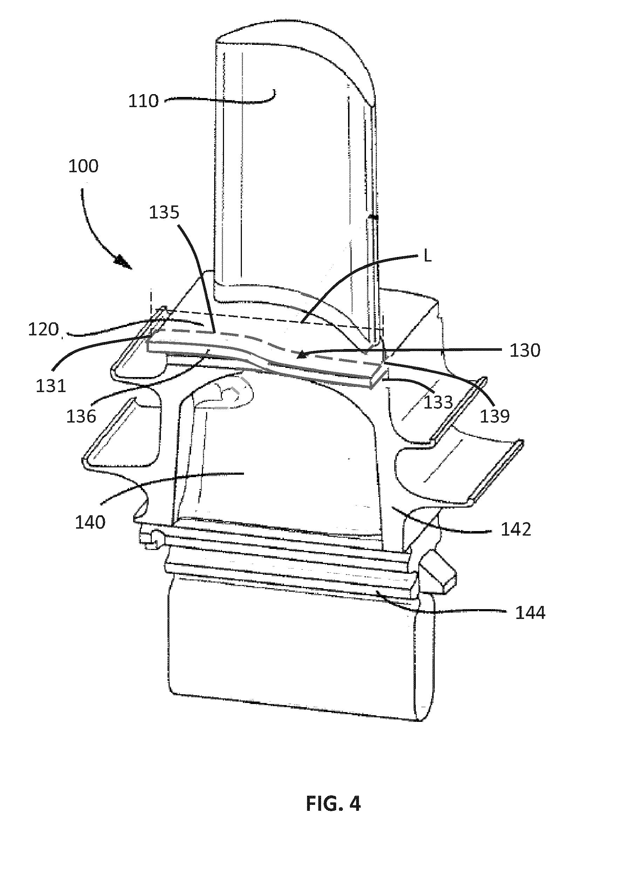

Referring now to FIGS. 1 and 3-4, the method 10 further comprises adding a new material 135 (illustrated in FIG. 4) in step 12 to the slash face 130 to build a new outer edge 136 (illustrated in FIG. 4). The new outer edge 136 replaces at least the removed portion 134 (illustrated in FIG. 3) that was formed during the removal process in step 11. The new outer edge 136 thereby extends the entire length L of the slash face 130 -- i.e., from the leading side 131 to the trailing side 139 of the bucket platform 120.

The new material 135 may be added to the slash face 130 at the removed portion 134 via any suitable method given the type of material utilized. For example, in some embodiments the new material 135 may be added in step 12 via laser cladding. In some embodiments, other material addition methods may additionally or alternatively be used such as welding, brazing or the like.

The new material 135 added in step 12 is added to build the new outer edge 136 of the slash face 130. In some embodiments, the new material 135 added to the slash face 130 may exceed the dimensions of the new outer edge 136 such that it can be machined down to its final dimensions as will become appreciated herein. In even some embodiments, these final dimensions will exceed the original dimensions of the original outer edge 132 (illustrated in FIG. 2) as will also become appreciated herein. The new material 135 added in step 12 may comprise any suitable material for the utilization of the turbine bucket 100. For example, in some embodiments, the new material 135 may comprise the same type of material that was removed from the turbine bucket 100 in step 11. However, in some embodiments, the new material 135 may comprise a different material than the original material of the original outer edge 132. For example, in some embodiments, the new material 135 may be more resistant to oxidation than the original material of the original outer edge 132. In such embodiments, the new outer edge 136 may thereby possess increased oxidation resistance compared to the original, pre-modified turbine bucket 100.

Referring to FIGS. 1 and 4, the method 10 may optionally further include machining the new material 135 after it is added to form the new outer edge 136 in step 13. Machining in step 13 may include any applicable process that shapes the added new material 135 to its final dimensions, finishes the surface of the new outer edge 136 to suitable characteristics, and/or otherwise treats the new material 135 prior to utilization of the turbine bucket 100.

For example, in some embodiments, after new material 135 is added in step 12, some of the new material 135 may be machined via milling, grinding or the like and may be automated, manual or combinations thereof. Machining in step 13 may also occur via one single pass or through multiple iterations. Machining may continue in step 13 to bring the dimensions of the new outer edge 136 within a specified tolerance for the modified turbine bucket 100.

In some embodiments, the new outer edge 136 is machined back to the same dimensional tolerance of the original outer edge 132. As discussed above, the dimensional tolerance of the original outer edge 132 can refer to the dimensional tolerance of the outer edge as originally designed and/or manufactured by an original equipment manufacturer, or the outer edge as originally received by a facility that may have undergone one or more previous modifications (e.g., repairs, adjustments, upgrades, etc.) prior to undergoing the modification through method 10.

In other embodiments, one or more of the dimensions of the new outer edge 136 of the slash face 130 may be different than the original dimensions of the original outer edge 132 (i.e., different than the original design/manufacturing or different than the turbine bucket 100 as it existed prior to undergoing method 10). For example, in some embodiments one or more of the dimensions of the new outer edge 136 may be greater than the original outer edge 132. In such embodiments, for example, the new outer edge 136 may extend further from the turbine bucket 100 than the original outer edge 132 for any suitable distance such that it would not interfere with the slash face of an adjacent turbine bucket. For instance, if the original outer edge 132 was removed for a depth of about 1.016 mm, the new outer edge 136 may extend for a distance of about 1.270 mm making it extend about 0.254 mm further out than the original outer edge 132. Such embodiments can decrease the gap present between the two slash faces 130 of adjacent turbine buckets 100 once installed on a turbine wheel. This, in turn, can reduce hot gas ingestion and may allow for increased performance.

In even some embodiments, the turbine bucket 100 may have both slash faces 130 modified via method 10 - i.e., modifying the slash face 130 on the pressure side as well as the slash face 130 on the suction side of the turbine bucket 100. In such embodiments, each slash face may undergo the same steps at the same time, may undergo the method 10 independently, or any variation thereof. Furthermore, the new outer edges 136 of each slash face 130 may be sized to the same dimensions or to different dimensions, each of which may or may not be the same as the original dimensions of the original outer edges 132.

It should now be appreciated that turbine buckets may be modified by removing the entire length of an original outer edge of a slash face, adding new material and potentially machining the new material to produce a new outer edge of the slash face. By modifying the entire length of the slash face, the turbine bucket can have more uniform properties across its entire slash face. Furthermore, the new outer edge may possess stronger oxidation properties and/or greater dimensions than the original outer edge of the slash face to promote a stronger, longer lasting new outer edge with a smaller gap between adjacent turbine buckets.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for modifying a turbine bucket, the method comprising:
   removing at least an original outer edge for an entire length of a slash face of the turbine bucket; and,
   adding a new material to the slash face to build a new outer edge, wherein the new outer edge extends the entire length of the slash face.
2. The method of clause 1, further comprising machining the new material after it is added to form the new outer edge.
3. The method of any preceding clause, wherein the new outer edge extends further from the turbine bucket than the original outer edge.
4. The method of any preceding clause, wherein the new material comprises a different material than an original material of the original outer edge.
5. The method of any preceding clause, wherein the new material is more resistant to oxidation than the original material of the original outer edge.
6. The method of any preceding clause, wherein removing at least the original outer edge for the entire length of the slash face is performed at a removal depth of about 1.270 mm to about 1.016 mm.
7. The method of any preceding clause, wherein the new material is added via laser cladding.
8. The method of any preceding clause, further comprising:
   removing at least a second original outer edge for the entire length of a second slash face of the turbine bucket; and,
   adding the new material to the second slash face to build a second new outer edge, wherein the second new outer edge extends the entire length of the second slash face.
9. The method of any preceding clause, further comprising machining the new material after it is added to form the second new outer edge.
10. The method of any preceding clause, wherein the second new outer edge extends further from the turbine bucket than the second original outer edge.
11. A modified turbine bucket comprising:
   an airfoil extending from a bucket platform;
   a root portion extending from an opposite side of the bucket platform; and,
   a slash face on the bucket platform, the slash face comprising a new outer edge;
      wherein an original outer edge was removed for an entire length of the slash face of the turbine bucket prior to adding new material to the slash face to build the new outer edge; and,
      wherein the new outer edge extends the entire length of the slash face.
12. The modified turbine bucket of any preceding clause, wherein the new material was machined after being added to form the new outer edge.
13. The modified turbine bucket of any preceding clause, wherein the new outer edge extends further from the turbine bucket than the original outer edge.
14. The modified turbine bucket of any preceding clause, wherein the new material comprises a different material than the original material of the original outer edge.
15. The modified turbine bucket of any preceding clause, wherein the new material is more resistant to oxidation than the original material of the original outer edge.
16. The modified turbine bucket of any preceding clause, wherein the original outer edge was removed at a removal depth of about 1.270 mm to about 1.016 mm.
17. The modified turbine bucket of claim 11 further comprising:
   a second slash face comprising a second new outer edge;
   wherein a second original outer edge was removed for the entire length of the second slash face of the turbine bucket prior to adding new material to the second slash face to build the second new outer edge; and,
   wherein the second new outer edge extends the entire length of the second slash face.
18. The modified turbine bucket of any preceding clause, wherein the new material was machined after being added to the second slash face to form the second new outer edge.
19. The modified turbine bucket of any preceding clause, wherein the second new outer edge extends further from the turbine bucket than the second original outer edge.
20. The modified turbine bucket of any preceding clause, wherein the modified turbine bucket comprises a first stage bucket.

## Claims

1. A method (10) for modifying a turbine bucket, the method comprising:
removing (11) at least an original outer edge for an entire length of a slash face of the turbine bucket; and,
adding (12) a new material to the slash face to build a new outer edge, wherein the new outer edge extends the entire length of the slash face.

2. The method of claim 1 further comprising machining (13) the new material after it is added to form the new outer edge, wherein, preferably, the new outer edge extends further from the turbine bucket than the original outer edge

3. The method of claim 1 or claim 2, wherein the new material comprises a different material than an original material of the original outer edge, wherein, preferably, the new material is more resistant to oxidation than the original material of the original outer edge.

4. The method of claim 1, 2 or 3, wherein removing (11) at least the original outer edge for the entire length of the slash face is performed at a removal depth of about 1.270 mm to about 1.016 mm.

5. The method of any preceding claim, wherein the new material is added via laser cladding.

6. The method of any preceding claim, further comprising:
removing at least a second original outer edge for the entire length of a second slash face of the turbine bucket; and,
adding the new material to the second slash face to build a second new outer edge, wherein the second new outer edge extends the entire length of the second slash face.

7. The method of claim 8, further comprising machining the new material after it is added to form the second new outer edge, wherein, preferably, the second new outer edge extends further from the turbine bucket than the second original outer edge.

8. A modified turbine bucket (100) comprising:
an airfoil (110) extending from a bucket platform (120);
a root portion (140) extending from an opposite side of the bucket platform (120); and,
a slash face (130) on the bucket platform (120), the slash face (130) comprising a new outer edge;
wherein an original outer edge (132) was removed for an entire length of the slash face (130) of the turbine bucket (100) prior to adding new material to the slash face (130) to build the new outer edge; and,
wherein the new outer edge extends the entire length of the slash face (130).

9. The modified turbine bucket of claim 8, wherein the new material was machined after being added to form the new outer edge, wherein, preferably, the new outer edge extends further from the turbine bucket than the original outer edge (132).

10. The modified turbine bucket of claim 8 or claim 9, wherein the new material comprises a different material than the original material of the original outer edge (132), wherein, preferably, the new material is more resistant to oxidation than the original material of the original outer edge (132).

11. The modified turbine bucket of claim 8, 9 or 10, wherein the original outer edge (132) was removed at a removal depth of about 1.270 mm to about 1.016 mm.

12. The modified turbine bucket of any one of claims 8 to 11, further comprising:
a second slash face comprising a second new outer edge;
wherein a second original outer edge was removed for the entire length of the second slash face of the turbine bucket prior to adding new material to the second slash face to build the second new outer edge; and,
wherein the second new outer edge extends the entire length of the second slash face.

13. The modified turbine bucket of claim 12, wherein the new material was machined after being added to the second slash face to form the second new outer edge.

14. The modified turbine bucket of claim 12 or claim 13, wherein the second new outer edge extends further from the turbine bucket (100) than the second original outer edge.

15. The modified turbine bucket of any one of claims 8 to 14, wherein the modified turbine bucket (100) comprises a first stage bucket.
